# FASCICULE DE BREVET EUROPEEN

(11) **EP 2 440 444 B1**
(45) Date de publication et mention de la délivrance du brevet: **19.12.2012**
(21) Numéro de dépôt: 10737965.3
(22) Date de dépôt: 08.06.2010
(51) Int. Cl.: B62J 7/04, B62K 25/28

(54) **VEHICULE A AU MOINS DEUX ROUES A CADRE SUSPENDU, EQUIPE D'UN ENSEMBLE DE PORTAGE**
FAHRZEUG MIT MINDESTENS ZWEI RÄDERN MIT RADAUFHÄNGUNG, DAS MIT EINER TRAGVORRICHTUNG AUSGESTATTET IST
VEHICLE WITH AT LEAST TWO WHEELS HAVING SUSPENSION AND EQUIPPED WITH A CARRIER

(30) Priorité: 08.06.2009 FR 0953779
(43) Date de publication de la demande: 18.04.2012
(73) Titulaire: Decathlon, 59650 Villeneuve D'ascq (FR)
(72) Inventeur: DASSONNEVILLE, Stéphane, F-59910 Bondues (FR); CARRELET, Benoit, F-59000 Lille (FR); WEULERSSE, Bruno, F-LILLE 59000 (FR)
(74) Mandataire: Balesta, Pierre
(86) Numéro de dépôt international: PCT/FR2010/051133
(87) Numéro de publication internationale: WO 2010/142907

(56) Documents cités:
- EP-A1- 1 069 034
- DE-U1- 20 015 126
- US-A1- 2009 001 115

## Description

La présente invention concerne un véhicule à au moins deux roues, tel qu'une bicyclette par exemple de type VTT. Plus précisément, l'invention concerne un tel véhicule comportant un cadre suspendu, et équipé d'un ensemble de portage destiné notamment à remplir la fonction de porte-bagage ou porte-bébé.

Par bicyclettes à cadre suspendu, on entend un véhicule dont le cadre se décompose en une partie avant ou châssis avant portant notamment la roue avant, et une partie arrière distincte de la partie avant, ou ensemble arrière oscillant, portant la roue arrière et reliée suspendue au châssis avant.

Par opposition, les bicyclettes qui ne sont pas équipées d'un cadre suspendu, sont équipées d'un cadre rigide, sans liberté de mouvement entre la partie arrière portant la roue arrière et la partie avant portant la roue avant.

On connaît différents système de portage équipant des bicyclettes. Les systèmes classiques de porte-bagage ou de porte-bébé sont généralement peu adaptés aux bicyclettes à cadre suspendu.

En effet, les contraintes réglementaires interdisent le mouvement relatif entre la selle et le bébé, et imposent de maintenir une distance minimum entre la selle et le corps du bébé pour des raisons de sécurité.

Ces contraintes réglementaires peuvent être facilement prises en compte pour la conception d'une bicyclette à cadre rigide.

On peut ainsi, à titre d'exemple, utiliser une plaque intermédiaire qui vient se fixer sur le porte-bagage et sous le porte-bébé, et qui est par ailleurs solidarisée au cadre. Cette plaque, correctement fixée et de dimensions adaptées, permet de maintenir la distance réglementaire entre la selle et le corps du bébé. Par ailleurs, la rigidité du cadre et la rigidité de la solidarisation entre les différents éléments (porte-bagage, plaque, porte-bébé, cadre) interdit le mouvement relatif entre la selle et le bébé.

Dans le cas d'une bicyclette à cadre suspendu, il est nécessaire de prendre en compte l'absence de rigidité entre la partie avant du cadre, qui porte notamment la selle, et la partie arrière de ce cadre, qui porte notamment le bébé.

On connaît des solutions dans lesquelles l'élément porteur du porte-bagage est relié au tube de selle et supporté directement par un des montants du châssis avant. Le porte-bagage est ainsi directement intégré dans le cadre de la bicyclette, constituant un prolongement d'un des montants du châssis avant. C'est le cas par exemple de la solution décrite dans le document WO 00/43258,

La liaison directe entre le porte-bagage et le châssis avant, sans liaison avec l'ensemble arrière oscillant, permet notamment d'éviter les mouvements relatifs entre le porte-bagage et la selle.

Toutefois, une telle solution augmente le poids de la bicyclette, et son coût de fabrication.

On connaît également des solutions telles que celles décrites dans les documents EP 1 069 034 qui décrit l'état de la technique le plus proche et DE 200 15 126 U.

Les bicyclettes décrites dans ces documents comprennent un cadre suspendu et un ensemble de portage. L'ensemble de portage est relié par sa partie avant au châssis avant du cadre, au niveau du tube de selle, et est relié à articulation par son extrémité arrière à l'ensemble arrière oscillant du cadre par l'intermédiaire.d'une bielle.

Toutefois, de telles solutions ne garantissent pas que l'élément porteur de l'ensemble de portage, destiné à recevoir des bagages ou un porte-bébé, ne bouge pas ou ne bouge que très faiblement verticalement. Or, le mouvement vertical de l'élément porteur, en cours d'utilisation du vélo, peut causer des dommages aux bagages transportés lorsque ceux-ci sont fragiles. En outre, lorsqu'il est question de transporter un bébé sur un porte-bébé, ce mouvement vertical engendre un inconfort qui finit par limiter les temps de trajet possibles.

L'objet de l'invention est donc d'apporter une solution aux problèmes précités parmi d'autres problèmes.

L'invention se rapporte ainsi à un véhicule à au moins deux roues, notamment bicyclette comportant un châssis avant et un ensemble arrière oscillant.

L'ensemble arrière oscillant porte une roue arrière motrice. Il est solidaire du châssis avant par un système amortisseur, et également relié à ce châssis avant à articulation autour d'un premier point pivot.

Le véhicule comprend également un ensemble de portage comprenant un élément porteur et un élément support.

L'élément porteur présente une extrémité avant et une extrémité arrière, et l'élément support présente une extrémité supérieure et une extrémité inférieure.

L'extrémité avant de l'élément porteur est reliée au châssis avant, et son extrémité arrière est reliée à l'extrémité supérieure de l'élément support à articulation autour d'un deuxième point pivot. Par ailleurs, l'extrémité inférieure de l'élément support est reliée à l'ensemble arrière oscillant à articulation autour d'un troisième point pivot.

De façon caractéristique, l'ensemble de portage et l'ensemble arrière oscillant sont agencés pour que, en cours de compression du système amortisseur, l'élément support passe d'une position dans laquelle le troisième point pivot se situe d'un premier côté de l'axe passant par les premier et deuxième points pivot, à une position dans laquelle ce troisième point pivot se situe d'un deuxième côté de l'axe passant par les premier et deuxième points pivot, de sorte que les premier, deuxième et troisième points pivot sont sensiblement alignés à au moins un stade de compression du système amortisseur.

Ainsi, en garantissant l'alignement des premier, deuxième et troisième points pivots, à au moins un stade de compression du système amortisseur, on garantit qu'au moins à ce stade de compression et dans une plage de compression qui entoure ce stade de compression, le deuxième point pivot ne subit aucun ou pratiquement aucun mouvement vertical. En conséquence, dans cette plage de compression, l'élément porteur de l'ensemble de portage ne subit aucun ou pratiquement aucun mouvement vertical, ce qui rend le transport de bagage plus sécurisant et le transport d'un bébé plus confortable.

Un certain nombre de variantes sont présentées ci-après, qui peuvent être considérées seules ou en combinaison avec une ou plusieurs autres.

Les premier, deuxième et troisième points pivot sont sensiblement alignés à au moins un stade de compression du système d'amortisseur compris entre 50% et 70% de sa course maximum et/ou compris entre 40% et 60% de sa course utile.

La course maximale du système amortisseur correspond à la course du système amortisseur entre la position de repos à vide, c'est-à-dire sans charge sur le véhicule donc sans aucune compression du système, et la position de compression maximale du système.

La course utile du système amortisseur correspond à la course du système amortisseur entre la position de repos mais en charge, c'est-à-dire avec une certaine charge sur le véhicule donc avec un début de compression du système, et la position de compression maximale du système.

Par charge sur le véhicule, on entend la charge constituée par l'utilisateur conducteur du véhicule, à laquelle s'ajoute éventuellement la charge transportée sur l'ensemble de portage tel qu'un bagage ou un enfant.

Le châssis avant comprend un tube de selle, et l'extrémité avant de l'élément porteur est reliée au châssis avant au niveau de ce tube de selle.

L'extrémité avant de l'élément porteur est reliée au châssis avant à articulation autour d'un quatrième point pivot.

L'ensemble arrière oscillant comprend un hauban, et l'extrémité inférieure de l'élément support est reliée à l'ensemble arrière oscillant au niveau de ce hauban.

Le système amortisseur présente une extrémité avant reliée au châssis avant et une extrémité arrière reliée à l'ensemble arrière oscillant.

La liaison entre l'extrémité avant du système amortisseur et le châssis avant est à articulation, de préférence au niveau du tube de selle.

La liaison entre l'extrémité arrière du système amortisseur et l'ensemble arrière oscillant est à articulation, de préférence au niveau de l'extrémité avant du hauban.

En cours de compression du système amortisseur, le deuxième point pivot se déplace verticalement d'une distance maximale de 0.5 mm par rapport à sa position lorsque le système amortisseur est au repos.

Ce déplacement est mesuré à vide, c'est-à-dire sans aucune charge sur le véhicule, et/ou avec une certaine charge correspondant au poids de l'utilisateur conducteur auquel s'ajoute éventuellement le poids de la charge transportée sur l'ensemble de portage tel qu'un bagage ou un enfant.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants :
- figures 1a, 1b, 1c : représentent schématiquement un premier exemple de cinématique d'un véhicule selon l'invention, respectivement à 0%, 50% et 100% de la compression du système amortisseur,
- figure 2 : représente schématiquement le premier exemple de cinématique d'un véhicule selon l'invention, avec en superposition les trois configurations respectives à 0%, 50% et 100% de la compression du système amortisseur,
- figure 3 : représente schématiquement un deuxième exemple de cinématique d'un véhicule selon l'invention,
- figure 4 : représente schématiquement un troisième exemple de cinématique d'un véhicule selon l'invention.

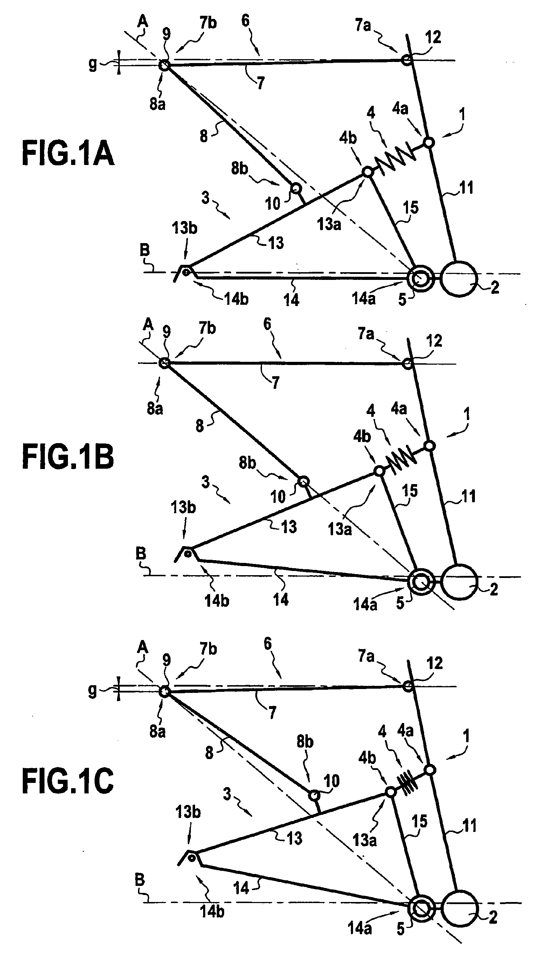

Les figures 1a, 1b, 1c correspondent à des représentations schématiques de la cinématique d'un véhicule selon l'invention, par exemple de type bicyclette, dans un premier exemple de réalisation.

Dans cet exemple, le cadre de type suspendu comprend une partie avant 1 ou châssis avant 1, dont seul l'élément sensiblement vertical 11, correspondant au tube de selle 11, à était représenté. Ce châssis avant est destiné notamment à porter la roue avant de la bicyclette.

Dans cet exemple de réalisation, le châssis avant 1 porte un ensemble pédalier 2.

Le cadre suspendu comprend par ailleurs un ensemble arrière oscillant 3, destiné à porter une roue arrière motrice.

Cet ensemble arrière oscillant 3 est relié au châssis avant 1, d'une part par un système amortisseur 4 et d'autre part par un premier point pivot 5.

Dans cet exemple de réalisation, l'ensemble arrière oscillant 3 comprend un hauban 13 qui s'étend depuis l'axe de la roue arrière, en son extrémité arrière 13b, jusqu'au point de liaison avec le système amortisseur 4, en son extrémité avant 13a.

L'ensemble arrière oscillant 3 comprend également un montant 15 qui s'étend depuis l'extrémité avant 13a du hauban 13 jusqu'au premier point pivot 5.

Dans cet exemple de réalisation, le premier point pivot 5 se trouve au niveau de l'ensemble pédalier 2 porté par le châssis avant 1, en bas du tube de selle 11.

Enfin, l'ensemble arrière oscillant 3 comprend un élément de base 14 qui s'étend depuis son extrémité arrière 14b jusqu'à son extrémité avant 14a, entre l'extrémité arrière 13b du hauban 13 et le premier point pivot 5.

Le système amortisseur 4 présente une extrémité arrière 4b reliée à articulation au niveau de l'extrémité avant 13a du hauban 13, et une extrémité avant 4a reliée à articulation au châssis avant 1, au niveau du tube de selle 11.

Par ailleurs, la bicyclette est pourvue d'un ensemble de portage 6 comprenant d'une part un élément porteur 7 et d'autre part un élément support 8.

L'élément porteur 7 est destiné à recevoir une charge, telle qu'un bagage ou un porte-bébé. Dans le cas d'un porte-bébé, cet élément porteur 7 peut faire partie intégrante du porte-bébé. Autrement dit, dans ce cas, un des éléments du porte-bébé vient s'assembler directement sur le véhicule en sorte de constituer l'élément porteur 7.

Cet élément porteur 7 s'étend sensiblement horizontalement depuis son extrémité arrière 7b jusqu'à son extrémité avant 7a ou il est relié au châssis avant 1, de préférence à articulation en un quatrième point pivot 12, au niveau du tube de selle 11.

L'élément support 8 s'étend depuis son extrémité supérieure 8a jusqu'à son extrémité inférieure 8b, entre l'extrémité arrière 7b de l'élément porteur 7 et l'ensemble arrière oscillant 3.

La liaison entre l'extrémité arrière 7b de l'élément porteur 7 et l'extrémité supérieure 8a de l'élément support 8 est une liaison à articulation au niveau d'un deuxième point pivot 9.

La liaison entre l'extrémité inférieure 8b de l'élément support 8 et l'ensemble arrière oscillant 3 est une liaison à articulation au niveau d'un troisième point pivot 10.

Cette liaison entre l'élément support 8, par son extrémité inférieure 8b, et l'ensemble arrière oscillant 3 se fait au niveau du hauban 13.

La figure 1a représente le véhicule au repos, dans une configuration chargée, c'est-à-dire avec un début de compression du système amortisseur 4 due au poids de l'utilisateur sur le vélo et éventuellement au poids de la charge transportée sur l'ensemble de portage. La figure 1b représente le véhicule en utilisation, en configuration chargée à 50% de la course utile de compression du système amortisseur 4. Enfin, la figure 1c représente le véhicule en utilisation, en configuration chargée à 100% de la course utile de compression du système amortisseur.

On constate que l'ensemble de portage 6 et l'ensemble arrière oscillant 3 sont tels que le premier point pivot 5, le deuxième point pivot 9 et le troisième point pivot 10, sont alignés le long de l'axe A, à un stade de compression du système amortisseur correspondant à 50% de sa course utile (figure 1b).

L'ensemble arrière oscillant 3 oscille en fonction de la compression du système amortisseur 4.

Ainsi, l'axe de la roue arrière, correspondant à l'intersection entre l'élément de base 14 et le hauban 13, se déplace verticalement, au cours de la compression du système amortisseur 4, d'une distance d1 (figure 1b : compression à 50% de la course utile du système amortisseur 4), et d2 (figure 1c : compression à 100% de la course utile du système amortisseur 4).

Par ailleurs, au cours de la compression du système amortisseur 4, le troisième point pivot 10 oscille d'un côté et de l'autre de l'axe A passant par les premier et deuxièmes points pivot 5 et 9, de sorte que les trois points pivots 5, 9 et 10 se retrouvent alignés à un stade de la compression du système amortisseur 4.

Dans une configuration préférée, cet alignement des trois points pivots 5, 9 et 10 est obtenu dans une plage de compression de 40 % à 60 % de la course utile de compression du système amortisseur, correspondant approximativement à une plage de compression de 50 % à 70 % de la course maximale de compression de ce système amortisseur 4.

Dans l'exemple de réalisation représenté aux figures 1a, 1b et 1c, et plus précisément en référence à la figure 1b, le stade de compression pour lequel on obtient cet alignement des trois points pivots 5, 9 et 10 correspond sensiblement à une compression du système amortisseur 4 de 50% de la course utile de compression.

Par ailleurs, l'extrémité arrière 7b de l'élément porteur 7 de l'ensemble de portage 6, correspondant au deuxième point pivot 9 se déplace verticalement, au cours de la compression du système amortisseur 4, d'une distance g très faible, de l'ordre de quelques millimètres (par exemple 0.5 mm maximum dans une variante de réalisation préférée).

Grâce à cette configuration, les bagages transportés, ou les personnes transportées, sur l'ensemble de portage 6 subissent très peu de mouvements verticaux résultant de la compression du système amortisseur 4, cette compression résultant à son tour de la configuration de la route sur laquelle circule la bicyclette.

En pratique, on prévoit lors de la conception du véhicule, que celui-ci soit adapté pour des personnes d'une certaine catégorie de poids, et pour le transport sur l'ensemble de portage d'une charge d'un poids maximal donné.

Ainsi, pour un véhicule donné, la notion de configuration chargée correspond à une configuration dans laquelle la charge du véhicule est constituée d'un utilisateur conducteur, de poids appartenant à la catégorie de poids pour laquelle le véhicule est conçu, auquel s'ajoute une charge portée par l'ensemble de portage de poids ne dépassant pas le poids maximal donné.

Pour réaliser cette adaptation, on peut agir sur le réglage à vide du système de compression, sur la raideur de l'élément de compression quand le système de compression comprend un tel élément (par exemple un ressort), sur les dimensions des différents éléments de la structure du véhicule, notamment de l'ensemble arrière oscillant et de l'ensemble de portage, et sur la position des points de liaison articulée.

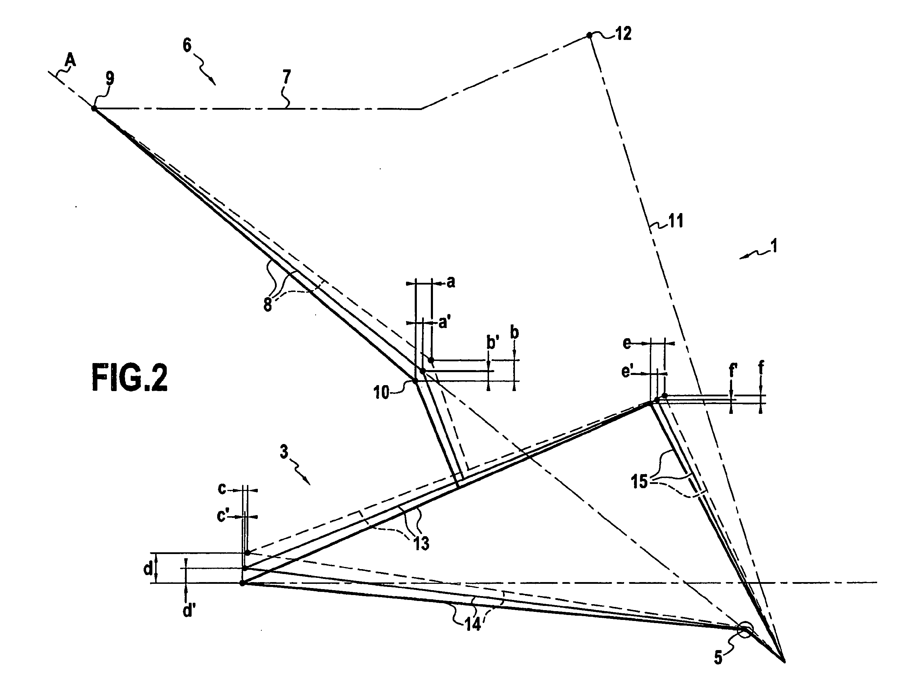

La figure 2 met en évidence cette cinématique, en représentant le véhicule dans les trois stades de compression du système amortisseur 4 correspondant respectivement à 0%, 50% et 100% de la course utile de compression de ce système amortisseur 4.

Plus précisément, les éléments pour lesquels un déplacement est mis en évidence sont représentés en traits pleins épais pour le stade de compression 0%, en traits pleins fins pour le stade de compression 50%, et en traits pointillés pour le stade de compression 100%.

On retrouve sur cette figure 2 les mêmes éléments de structure du cadre suspendu que ceux référencés aux figures 1a, 1b, 1c, portant donc les mêmes références numériques.

Ainsi, lorsque le système amortisseur (non représenté sur cette figure 2 par souci de clarté) passe de la position de repos, en charge, soit avec 0% de compression utile, à la position dans laquelle il est comprimé à 50% de la course utile de compression, l'ensemble arrière oscillant 3 se déplace.

Dans l'exemple de réalisation représenté à la figure 2 :
- le point correspondant à l'axe de la roue arrière (intersection du hauban 13 et de l'élément de base 14) se déplace verticalement d'une distance d' de 13.4 mm, et horizontalement d'une distance c' de 2.1 mm,
- le point correspondant à l'intersection du hauban 13 avec le montant 15 se déplace verticalement d'une distance f de 3.3 mm, et horizontalement d'une distance e' de 6.2 mm,
- le troisième point pivot 10 se déplace verticalement d'une distance b' de 9.1 mm, et horizontalement d'une distance a' de 6.8 mm.

Ce déplacement de l'ensemble arrière oscillant 3 n'engendre pratiquement aucun déplacement de l'élément porteur 7 de l'ensemble de portage 6. Ainsi, dans l'exemple de réalisation représenté à la figure 2, le passage de 0% à 50% de la course de compression utile du système amortisseur provoque un déplacement vertical du deuxième point pivot 9 de l'ordre de 0.4 mm, en tout cas inférieur à 0.5 mm.

Par ailleurs, lorsque le système amortisseur passe de la position de repos, en charge, soit avec 0% de compression utile, à la position dans laquelle il est comprimé à 100% de la course utile de compression, l'ensemble arrière oscillant 3 se déplace.

Dans l'exemple de réalisation représenté à la figure 2 :
- le point correspondant à l'axe de la roue arrière (intersection du hauban 13 et de l'élément de base 14) se déplace verticalement d'une distance d de 27.5 mm, et horizontalement d'une distance c de 4.7 mm,
- le point correspondant à l'intersection du hauban 13 avec le montant 15 se déplace verticalement d'une distance f de 6.6 mm, et horizontalement d'une distance e de 12.9 mm,
- le troisième point pivot 10 se déplace verticalement d'une distance b de 18.5 mm, et horizontalement d'une distance e de 14.4 mm.

Ce déplacement de l'ensemble arrière oscillant 3 n'engendre là encore pratiquement aucun déplacement de l'élément porteur 7 de l'ensemble de portage 6. Ainsi, dans l'exemple de réalisation représenté à la figure 2, le passage de 0% à 100% de la course de compression utile du système amortisseur provoque un déplacement vertical du deuxième point pivot 9 de l'ordre de 0.1 mm, en tout cas inférieur à 0.5 mm.

En pratique, le stade de compression du système amortisseur 4 pour lequel les trois points pivots 5, 9 et 10 sont alignés correspond sensiblement à un maximum du déplacement vertical g du deuxième point pivot 9.

Ainsi, ce déplacement vertical g du deuxième point pivot 9 croît de 0 ou 0.1 mm à quelques dixièmes de millimètres (inférieur à 0.5 mm dans l'exemple de réalisation correspondant aux figures 1a, 1b, 1c et 2), lorsque le système amortisseur 4 passe d'un stade de compression correspondant à 0% de la course de compression utile à un stade de compression correspondant à 50% de la course de compression utile.

Ensuite, ce déplacement vertical g du deuxième point pivot 9 décroît de quelques dixièmes de millimètres (inférieur à 0.5 mm dans l'exemple de réalisation correspondant aux figures 1a, 1b, 1c et 2) à sensiblement 0 ou 0.1 mm, lorsque le système amortisseur 4 passe d'un stade de compression correspondant à 50% de la course de compression utile à un stade de compression correspondant à 100% de la course de compression utile.

C'est ce qui est représenté dans le tableau T et dans le graphique G ci-dessous. Le tableau T regroupe les valeurs de déplacement g du deuxième point pivot 9 en mm dans la colonne de droite, en fonction des valeurs de compression en pourcentage de la course de compression utile du système amortisseur dans la colonne de gauche.

Ces valeurs sont représentées graphiquement dans le graphique G, avec en abscisse les valeurs de compression en pourcentage de la course de compression utile du système amortisseur, et en ordonnée les valeurs de déplacement g du deuxième point pivot 9 en mm.

**Tableau T**

| Compression en % | Deplacement verticale du deuxième point pivot 9 en mm |
|---|---|
| 0 | 0 |
| 5 | 0,08 |
| 10 | 0,16 |
| 15 | 0,23 |
| 20 | 0,29 |
| 25 | 0,34 |
| 30 | 0,39 |
| 35 | 0,42 |
| 40 | 0,45 |
| 45 | 0,46 |
| 50 | 0,47 |
| 55 | 0,46 |
| 60 | 0,45 |
| 65 | 0,42 |
| 70 | 0,39 |
| 75 | 0,34 |
| 80 | 0,29 |
| 85 | 0,23 |
| 90 | 0,16 |
| 95 | 0,08 |
| 100 | 0 |

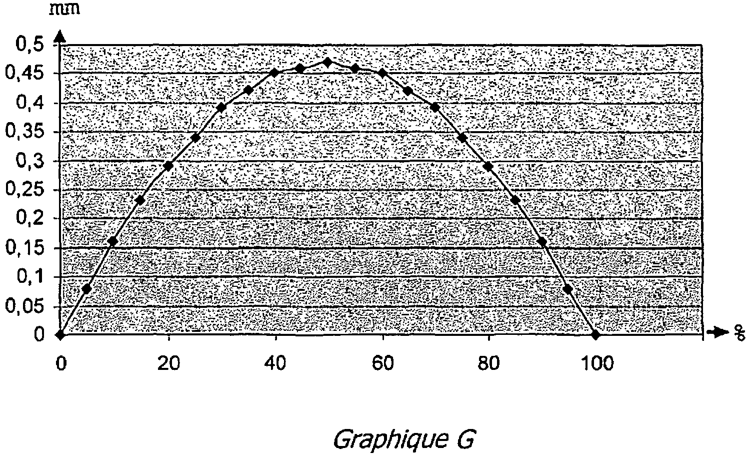

Pour mesurer les différents déplacements présentés plus haut en cours de compression du système amortisseur, tout comme l'alignement des trois points pivots à un certain stade de compression du système amortisseur, il suffit d'appliquer une certaine charge sur le véhicule.

L'application de cette charge peut être obtenue par exemple en plaçant une charge sur la selle du vélo et éventuellement une charge sur l'ensemble de portage, et donc en comprimant indirectement le système amortisseur.

On peut également directement comprimer le système amortisseur, en exerçant une action directement sur celui-ci par l'intermédiaire d'un outil ou d'une machine adaptée.

Ainsi, il est possible de réaliser ces mesures tout au long de la course maximale du système amortisseur, en partant de la position de repos, sans aucune charge, et en appliquant artificiellement et progressivement une charge par compression directe ou indirecte du système amortisseur.

On peut également réaliser ces mesures tout au long de la course utile du système amortisseur. Dans ce cas, on place au préalable sur le véhicule une charge correspondant au poids d'un utilisateur conducteur et éventuellement une charge correspondant au poids d'un bagage ou d'un enfant transporté sur l'ensemble de portage. Ensuite, en partant de cette position, on applique artificiellement et progressivement une charge par compression directe ou indirecte du système amortisseur.

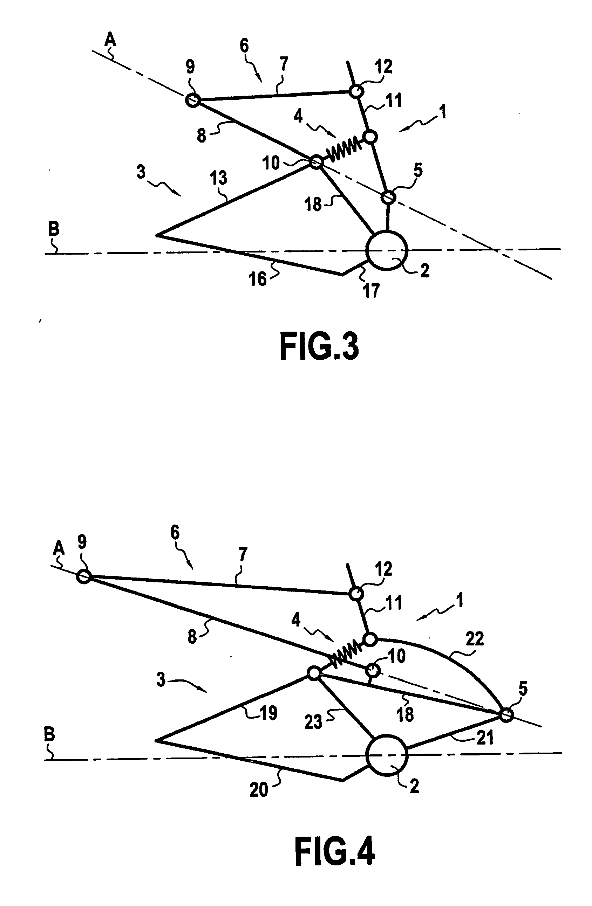

Les figures 3 et 4 correspondent à des représentations schématiques de la cinématique d'un véhicule selon l'invention, par exemple de type bicyclette, dans un deux autres exemples de réalisation, dans lesquels la structure du cadre suspendu diffère par rapport à celle représentée en figures 1a, 1b, 1c et 2.

Ainsi, sur ces deux figures 3 et 4, l'ensemble pédalier 2 est porté non pas par le châssis avant 1 mais par l'ensemble arrière oscillant 3, et le véhicule est représenté avec le système amortisseur 4 comprimé à 50% de sa course utile de compression.

Les trois points pivots 5, 9 et 10 sont ainsi alignés dans cette position.

En outre, dans l'exemple représenté à la figure 3, l'élément de base de l'ensemble arrière oscillant 3 se décompose en deux montants 16 et 17 qui s'étendent entre l'axe de la roue arrière (donc l'extrémité inférieure du hauban 13) et le pédalier 2.

L'ensemble arrière oscillant 3 est relié au châssis avant 1 en un premier point pivot 5, au niveau de ce pédalier 2.

Par ailleurs, l'ensemble arrière oscillant 3 est relié au châssis avant 1, par exemple au niveau du tube de selle 11, par l'intermédiaire du système amortisseur 4. Le point de liaison, à articulation entre l'ensemble arrière oscillant 3, au niveau de l'extrémité avant du hauban 13, et le système amortisseur 4, est le même que le troisième point pivot 10, c'est-à-dire le point d'articulation de l'élément support 8 de l'ensemble de portage 6 avec l'ensemble arrière oscillant 3.

Dans l'exemple représenté à la figure 4, la structure de l'ensemble arrière oscillant 3 diffère en ce que l'ensemble pédalier 2 est porté entre deux structures sensiblement triangulaires à 3 montants avec un montant commun.

Ainsi, l'ensemble pédalier est disposé à l'extrémité inférieure d'une première structure triangulaire 18, 21, 23, et à l'extrémité avant d'une deuxième structure triangulaire 19, 20, 23.

Le premier point pivot 5, réalisant une liaison articulé entre l'ensemble arrière oscillant 3 et le châssis avant 1, se situe à l'extrémité avant de la première structure triangulaire 18, 21, 23.

Le système amortisseur 4 relie également l'ensemble arrière oscillant 3 et le châssis avant 1, notamment par une liaison articulée à l'extrémité supérieure de la deuxième structure triangulaire 19, 20, 23, qui est aussi l'extrémité arrière de la première structure triangulaire 18, 21, 23.

Par ailleurs, l'élément support 8 de l'ensemble de portage 6 est relié à articulation, par son extrémité inférieure, au montant supérieur 18 de la première structure triangulaire 18, 21, 23, en le troisième point pivot 10.

Le châssis avant 1, partiellement représenté, comprend notamment le tube de selle 11 qui se prolonge en un montant 22 entre d'une part le point de liaison à articulation du système amortisseur 4 avec le châssis avant 1 et d'autre part le premier point pivot 5.

La présente description est donnée à titre d'exemple et n'est donc pas limitative de l'invention.

En particulier, la structure exacte du châssis avant 1 et de l'ensemble arrière oscillant 3 tels que présentés dans cette description n'est pas limitative. D'autres modes de réalisation peuvent être envisagés, pourvu que l'alignement des trois points pivots 5, 9 et 10 soit conservé à au moins un stade de compression du système amortisseur 4, ce stade de compression se situant de préférence à, ou autour de 50% de la course de compression utile de ce système amortisseur 4.

## Revendications

1. Véhicule à au moins deux roues, notamment bicyclette, comportant
- un châssis avant (1),
- un ensemble arrière oscillant (3) portant une roue arrière motrice, solidaire dudit châssis avant (1) par un système amortisseur (4), et également relié à ce dit châssis avant (1) à articulation autour d'un premier point pivot (5),
- un ensemble de portage (6) comprenant un élément porteur (7) présentant une extrémité avant (7a) et une extrémité arrière (7b), et un élément support (8) présentant une extrémité supérieure (8a) et une extrémité inférieure (8b), ladite extrémité avant (7a) dudit élément porteur (7) étant reliée au châssis avant (1), ladite extrémité arrière (7b) dudit élément porteur (7) étant reliée à ladite extrémité supérieure (8a) dudit élément support (8) à articulation autour d'un deuxième point pivot (9), ladite extrémité inférieure (8b) dudit élément support (8) étant reliée à l'ensemble arrière oscillant (3) à articulation autour d'un troisième point pivot (10),
**caractérisé en ce que** l'ensemble de portage (6), l'ensemble arrière oscillant (3) et le système amortisseur (4) sont agencés pour que, en cours de compression du système amortisseur (4), l'élément support (8) passe d'une position dans laquelle le troisième point pivot (10) se situe d'un premier côté de l'axe (A) passant par les premier et deuxième points pivot (5, 9) à une position dans laquelle ledit troisième point pivot (10) se situe d'un deuxième côté de l'axe (A) passant par lesdits premier et deuxième points pivot (5, 9), de sorte que lesdits premier, deuxième et troisième points pivot (5, 9, 10) sont sensiblement alignés à au moins un stade de compression dudit système amortisseur (4).

2. Véhicule selon la revendication 1, **caractérisé en ce que** les premier, deuxième et troisième points pivot (5, 9, 10) sont sensiblement alignés à au moins un stade de compression du système amortisseur (4) compris entre 50% et 70% de sa course maximum et/ou compris entre 40% et 60% de sa course utile.

3. Véhicule selon l'une quelconque des revendications 1 et 2, **caractérisé en ce que** le châssis avant (1) comprend un tube de selle (11), et **en ce que** l'extrémité avant (7a) de l'élément porteur (7) est reliée audit châssis avant (1) au niveau dudit tube de selle (11).

4. Véhicule selon l'une quelconque des revendications 1 à 3, **caractérisé en ce que** l'extrémité avant (7a) de l'élément porteur (7) est reliée au châssis avant (1) à articulation autour d'un quatrième point pivot (12).

5. Véhicule selon l'une quelconque des revendications 1 à 4, **caractérisé en ce que** l'ensemble arrière oscillant (3) comprend un hauban (13), et **en ce que** l'extrémité inférieure (8b) de l'élément support (8) est reliée audit ensemble arrière oscillant (3) au niveau de ce dit hauban (13).

6. Véhicule selon l'une quelconque des revendications 1 à 5, **caractérisé en ce que** le système amortisseur (4) présente une extrémité avant (4a) reliée au châssis avant (1) et une extrémité arrière (4b) reliée à l'ensemble arrière oscillant (3).

7. Véhicule selon la revendication 6, **caractérisé en ce que** la liaison entre l'extrémité avant (4a) du système amortisseur (4) et le châssis avant (1) est à articulation, de préférence au niveau du tube de selle (11).

8. Véhicule selon l'une quelconque des revendications 6 et 7, **caractérisé en ce que** la liaison entre l'extrémité arrière (4b) du système amortisseur (4) et l'ensemble arrière oscillant (3) est à articulation, de préférence au niveau de l'extrémité avant (13a) du hauban (13).

9. Véhicule selon l'une quelconque des revendications 1 à 8, **caractérisé en ce que**, en cours de compression du système amortisseur (4), le deuxième point pivot (9) se déplace verticalement d'une distance (g) maximale de 0.5 mm par rapport à sa position lorsque ledit système amortisseur (4) est au repos.

## Claims

1. A vehicle having at least two wheels, in particular a bicycle, having:
• a front chassis (1);
• a rockable rear assembly (3) carrying a driving rear wheel, secured to said front chassis (1) via a shock-absorber system (4), and also hinged to said front chassis (1) about a first pivot point (5);
• a carrier assembly (6) comprising a carrier element (7) having a front end (7a) and a rear end (7b), and a support element (8) having a top end (8a) and a bottom end (8b), said front end (7a) of said carrier element (7) being connected to the front chassis (1), said rear end (7b) of said carrier element (7) being hinged to said top end (8a) of said support element (8) about a second pivot point (9), said bottom end (8b) of said support element (8) being hinged to the rockable rear assembly (3) about a third pivot point (10);
**characterized in that** the carrier assembly (6), the rockable rear assembly (3) and the shock-absorber system (4) are arranged so that, during compression of the shock-absorber system (4), the support element (8) goes from a position in which the third pivot point (10) is situated on a first side of the axis (A) passing through the first and second pivot points (5, 9) to a position in which said third pivot point (10) is situated on a second side of the axis (A) passing through said first and second pivot points (5, 9), so that said first, second and third pivot points (5, 9, 10) are substantially aligned at at least one stage of compression of said shock-absorber system (4).

2. A vehicle according to claim 1, **characterized in that** the first, second, and third pivot points (5, 9, 10) are substantially aligned at at least one stage of compression of the shock-absorber system (4) lying in the range 50% of its maximum stroke to 70% of its maximum stroke and/or lying in the range 40% of its working stroke to 60% of its working stroke.

3. A vehicle according to claim 1 or claim 2, **characterized in that** the front chassis (1) includes a saddle tube (11), and **in that** the front end (7a) of the carrier element (7) is connected to said front chassis (1) at said saddle tube (11).

4. A vehicle according to any one of claims 1 to 3, **characterized in that** the front end (7a) of the carrier element (7) is hinged to the front chassis (1) about a fourth pivot point (12).

5. A vehicle according to any one of claims 1 to 4, **characterized in that** the rockable rear assembly (3) includes an upper stay (13), and **in that** the bottom end (8b) of the support element (8) is connected to said rockable rear assembly (3) at said upper stay (i3).

6. A vehicle according to any one of claims 1 to 5, **characterized in that** the shock-absorber system (4) has a front end (4a) connected to the front chassis (1) and a rear end (4b) connected to the rockable rear assembly (3).

7. A vehicle according to claim 6, **characterized in that** the coupling between the front end (4a) of the shock-absorber system (4) and the front chassis (1) is a hinge-coupling, preferably at the saddle tube (11).

8. A vehicle according to claim 6 or claim 7, **characterized in that** the coupling between the rear end (4b) of the shock-absorber system (4) and the rockable rear assembly (3) is a hinge-coupling, preferably at the front end (13a) of the upper stay (13).

9. A vehicle according to any one of claims 1 to 8, **characterized in that**, during compression of the shock-absorber system (4), the second pivot point (9) shifts vertically by a maximum distance (g) of 0.5 mm relative to its position when said shock-absorber system (4) is at rest.

## Patentansprüche

1. Fahrzeug mit wenigstens zwei Rädern, insbesondere Fahrrad, umfassend
- einen vorderen Rahmen (1),
- eine schwingende hintere Anordnung (3), die ein hinteres Antriebsrad trägt, über ein Dämpfungssystem (4) fest mit dem vorderen Rahmen (1) verbunden ist und mit diesem vorderen Rahmen (1) auch um einen ersten Schwenkpunkt (5) gelenkig verbunden ist,
- eine Trageanordnung (6) mit einem Tragelement (7), das ein vorderes Ende (7a) und ein hinteres Ende (7b) aufweist, sowie einem Stützelement (8), das ein oberes Ende (8a) und ein unteres Ende (8b) aufweist, wobei das vordere Ende (7a) des Tragelements (7) mit dem vorderen Rahmen (1) verbunden ist, wobei das hintere Ende (7b) des Tragelements (7) mit dem oberen Ende (8a) des Stützelements (8) um einen zweiten Schwenkpunkt (9) gelenkig verbunden ist, wobei das untere Ende (8b) des Stützelements (8) mit der schwingenden hinteren Anordnung (3) um einen dritten Schwenkpunkt (10) gelenkig verbunden ist,
**dadurch gekennzeichnet, daß** die Trageanordnung (6), die schwingende hintere Anordnung (3) und das Dämpfungssystem (4) eingerichtet sind, damit im Laufe des Einfederns des Dämpfungssystems (4) das Stützelement (8) von einer Position, in der der dritte Schwenkpunkt (10) auf einer ersten Seite der durch den ersten und den zweiten Schwenkpunkt (5, 9) verlaufenden Achse (A) gelegen ist, in eine Position gelangt, in der der dritte Schwenkpunkt (10) auf einer zweiten Seite der durch den ersten und den zweiten Schwenkpunkt (5, 9) verlaufenden Achse (A) gelegen ist, so daß der erste, der zweite und der dritte Schwenkpunkt (5, 9, 10) in wenigstens einem Einfederungsstadium des Dämpfungssystems (4) im wesentlichen fluchten.

2. Fahrzeug nach Anspruch 1, **dadurch gekennzeichnet, daß** der erste, der zweite und der dritte Schwenkpunkt (5, 9, 10) in wenigstens einem Einfederungsstadium des Dämpfungssystems (4), das zwischen 50 % und 70 % seines maximalen Hubs und/oder zwischen 40 % und 60 % seines Nutzhubs liegt, im wesentlichen fluchten.

3. Fahrzeug nach einem der Ansprüche 1 und 2, **dadurch gekennzeichnet, daß** der vordere Rahmen (1) ein Sattelrohr (11) umfaßt und daß das vordere Ende (7a) des Tragelements (7) im Bereich des Sattelrohrs (11) mit dem vorderen Rahmen (1) verbunden ist.

4. Fahrzeug nach einem der Ansprüche 1 bis 3, **dadurch gekennzeichnet, daß** das vordere Ende (7a) des Tragelements (7) mit dem vorderen Rahmen (1) um einen vierten Schwenkpunkt (12) gelenkig verbunden ist.

5. Fahrzeug nach einem der Ansprüche 1 bis 4, **dadurch gekennzeichnet, daß** die schwingende hintere Anordnung (3) eine Hinterradstrebe (13) umfaßt und daß das untere Ende (8b) des Stützelements (8) im Bereich dieser Hinterradstrebe (13) mit der schwingenden hinteren Anordnung (3) verbunden ist.

6. Fahrzeug nach einem der Ansprüche 1 bis 5, **dadurch gekennzeichnet, daß** das Dämpfungssystem (4) ein vorderes Ende (4a), das mit dem vorderen Rahmen (1) verbunden ist, sowie ein hinteres Ende (4b), das mit der schwingenden hinteren Anordnung (3) verbunden ist, aufweist.

7. Fahrzeug nach Anspruch 6, **dadurch gekennzeichnet, daß** die Verbindung zwischen dem vorderen Ende (4a) des Dämpfungssystems (4) und dem vorderen Rahmen (1) gelenkig ist, vorzugsweise im Bereich des Sattelrohrs (11).

8. Fahrzeug nach einem der Ansprüche 6 und 7, **dadurch gekennzeichnet, daß** die Verbindung zwischen dem hinteren Ende (4b) des Dämpfungssystems (4) und der schwingenden hinteren Anordnung (3) gelenkig ist, vorzugsweise im Bereich des vorderen Endes (13a) der Hinterradstrebe (13).

9. Fahrzeug nach einem der Ansprüche 1 bis 8, **dadurch gekennzeichnet, daß** im Laufe des Einfederns des Dämpfungssystems (4) sich der zweite Schwenkpunkt (9) gegenüber seiner Position, wenn sich das Dämpfungssystem (4) in Ruhe befindet, um einen maximalen Weg (g) von 0,5 mm vertikal bewegt.
